(19)

Europäisches
Patentamt
European
Patent Office
Office européen
des brevets

(11) **EP 3 716 194 A1**

(12) **EUROPEAN PATENT APPLICATION**
published in accordance with Art. 153(4) EPC

(43) Date of publication:
**30.09.2020 Bulletin 2020/40**

(51) Int Cl.:
***G06Q 40/08*** (2012.01)

(21) Application number: **18880390.2**

(22) Date of filing: **10.08.2018**

(86) International application number:
**PCT/CN2018/099998**

(87) International publication number:
**WO 2019/100763 (31.05.2019 Gazette 2019/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2017 CN 201711166508**

(71) Applicant: **Alibaba Group Holding Limited Grand Cayman (KY)**

(72) Inventors:
• **HU, Yue**
  **Zhejiang 311121 (CN)**
• **GUO, Xin**
  **Zhejiang 311121 (CN)**
• **ZHANG, Haitao**
  **Zhejiang 311121 (CN)**
• **CHENG, Danni**
  **Zhejiang 311121 (CN)**
• **WU, Bokun**
  **Zhejiang 311121 (CN)**

(74) Representative: **Ferro, Frodo Nunes**
**Hoffmann Eitle B.V.**
**Strawinskylaan 3051, 4th Floor**
**1077 ZX Amsterdam (NL)**

(54) **METHOD AND DEVICE FOR PROCESSING VEHICLE LOSS ASSESSMENT DATA AND PROCESSING DEVICE**

(57) Method and apparatus for processing loss assessment data for car insurance and processing device. The method may comprise: calculating the probability of occurrence of the damaged part combination in the loss assessment conclusion in combination with case information of the damaged part combination in the historical loss assessment conclusion data, the probability may indicate reliability of the loss assessment conclusion. If the probability is greater than a certain threshold, it may indicate that the damaged part combination in the loss assessment conclusion is a common damage combination, and the probability represents an occurrence probability of a normal parts combination. In the above method, if a part is damaged, a check to confirm whether other parts related to the part are also damaged can be done, and if so, a recommendation on missed damaged parts can be made, and the loss assessment conclusion can be supplemented or corrected.

Fig. 7

**Description**

TECHNICAL FIELD

The embodiments of the present description relate to the technical field of computer data processing, more particularly, to method and apparatus for processing loss assessment data for car insurance and processing device.

BACKGROUND

With the popularity of motor vehicles, car insurance business has also shown a significant increase. When a vehicle loss occurred, fast and accurate loss assessment can provide better user experience.

At present, there are many ways in the industry to assess losses automatically. In these ways, a user can take pictures of a damaged vehicle, then identify the damaged part with a processing device, and obtain a loss assessment conclusion based on the damaged part identified from the captured pictures. Such a loss assessment conclusion relies on machine learning algorithms, and error in automatic loss assessment may occur, resulting in an irrational loss assessment result. Moreover, it is often difficult to determine whether such an irrational loss assessment result is caused by the capturing angle, the influences from the environment at the scene or deliberate frauds.

Therefore, there is an urgent need in the industry for a solution that can further evaluate the reliability of the car insurance loss assessment conclusion.

SUMMARY

An object of the embodiments of the present description is to provide a method and an apparatus for processing loss assessment data for car insurance and a processing device, in which the loss assessment conclusion is processed from the perspective of damaged part combination, thereby it is possible to effectively identify any missed damaged parts in the loss assessment conclusion and therefore to improve the accuracy of the loss assessment conclusion, and to improve the user experience.

The method and apparatus for processing loss assessment data for car insurance and processing device as provided in the embodiments of the present description are implemented as follows:

A method for processing loss assessment data for car insurance, comprising:

receiving a loss assessment conclusion for car insurance;
calculating a probability of occurrence of damaged part combination in the loss assessment conclusion based on historical loss assessment conclusion data, the damaged part combination including at least one damaged part;
querying, when it is determined that the probability is greater than a first threshold, whether there is a damage-related part matching the damaged part; and
taking, if so, the damage-related part as a missed damaged part for the loss assessment conclusion.

A data processing apparatus for displaying an interface, comprising:

a receiving module configured to receive a loss assessment conclusion for car insurance;
a probability calculating module configured to calculate a probability of occurrence of damaged part combination in the loss assessment conclusion based on historical loss assessment conclusion data, the damaged part combination comprising at least one damaged part;
a related part determining module configured to query whether there is a damage-related part matching the damaged part when it is determined that the probability is greater than a first threshold; and
a first outputting module configured to take the damage-related part as a missed damaged part for the loss assessment conclusion when there is a matched damage-related part.

A processing device comprising a processor and a memory for storing processor-executable instructions, wherein when executing the instructions, the processor is configured to:

receive a loss assessment conclusion for car insurance;
calculate a probability of occurrence of damaged part combination in the loss assessment conclusion based on historical loss assessment conclusion data, the damaged part combination including at least one damaged part;
query, when it is determined that the probability is greater than a first threshold, whether there is a damage-related part matching the damaged part; and
if there is a damage-related part matching said damaged part, take the damage-related part as a missed damaged part for the loss assessment conclusion.

An electronic device comprising at least one processor and a memory for storing processor-executable instructions, wherein executing the instructions, the processor is configured to:

receive a loss assessment conclusion for car insurance;
calculate a probability of occurrence of damaged part combination in the loss assessment conclusion based on historical loss assessment conclusion data, the damaged part combination including at least one damaged part;
query, when it is determined that the probability is greater than a first threshold, whether there is a damage-related part matching the damaged part, and if there is a damage-related part matching said damaged part, take the damage-related part as a missed damaged part for the loss assessment conclusion; and
send a warning message if it is determined that the probability is lower than a second threshold warning message.

In the method and apparatus for processing loss assessment data for car insurance and processing device as provided in the embodiments of the present description, the probability of occurrence of the damaged part combination in the loss assessment conclusion can be calculated in view of case information of the damaged part combination in the historical loss assessment conclusion data, the probability may indicate reliability of the loss assessment conclusion. If the probability is greater than a certain threshold, it may indicate that the damaged part combination in the loss assessment conclusion is a common combination of damages (may also be referred to as a frequent combination of damages), and the probability represents an occurrence probability of a normal parts combination. In the embodiments as provided in the present description, if a part is damaged, it is possible to check whether any other parts related to the part are also damaged, and if so, a recommendation on missed damaged parts can be provided for supplement or correction of the loss assessment conclusion. In this way, it is possible to solve the problem of outputting irrational loss assessment conclusion in some scenarios, effectively improve the accuracy and reliability of the output loss assessment conclusion, and improve user experience.

BRIEF DESCRIPTION OF DRAWINGS

In order to describe the technical solutions in the embodiments of the present description or in the prior art more clearly, the accompanying drawings for the embodiments or the prior art will be briefly introduced in the following. It is apparent that the accompanying drawings described in the following are merely some examples disclosed in this description, and a person of ordinary skill in the art can still derive other drawings from these accompanying drawings without creative efforts.

FIG. 1 is a schematic flowchart of a process according to an embodiment of the method described in the present description;
FIG.2 is a schematic flowchart of another embodiment of the method described in the present description;
FIG.3 is a block diagram of a hardware structure of a mobile terminal where a method for processing loss assessment data for car insurance according to an embodiment of the present description is applicable;
FIG.4 is a schematic module structure diagram of an embodiment of an apparatus for processing loss assessment data for car insurance, provided in the present description;
FIG. 5 is a schematic module structure diagram of another embodiment of the apparatus provided in the present description;
FIG. 6 is a schematic module structure diagram of another embodiment of the apparatus provided in the present description;
FIG. 7 is a schematic diagram of a system framework of a loss assessment decision-making system constructed using the method described in the present description.

DESCRIPTION OF EMBODIMENTS

In order to enable those skilled in the art to better understand the technical solutions disclosed in the present description, the technical solutions of the embodiments of the present description will be clearly and completely described in the following with reference to the accompanying drawings in the embodiments of the present description. It is apparent that the embodiments described are merely some, rather than all, of the embodiments of the present description. All other embodiments obtained by those of ordinary skill in the art based on one or more embodiments of the present description without creative efforts should fall within the scope of the embodiments of the present description.
When a vehicle is damaged, the number of damaged part(s) may be more than one in most cases. If a collision occurs at right front portion of the vehicle, the damaged parts may generally include a plurality of parts such as a front bumper, a lamp, a tire, a fender, and the like, and the one or more damaged parts that are damaged in a single accident may be referred to as damaged part combination. In some embodiments of the present description, the combination of damaged part may comprise some parts that are connected at outer surface of the vehicle, and may also comprise some parts that are connected to the interior of the vehicle from the exterior, or may be damaged part combination including a plurality of sub-parts as an integral part, such as a combination of damaged part including two damaged parts of a rearview mirror frame and mirror glass. Other embodiments may also include some parts that are not directly connected, such as damaged part combination composed of a vehicle tail light and a light controller of the center console.

Usually, in the event of vehicle collision, if one part is damaged, it is often accompanied by damages to some neighboring parts, e.g., if a fog lamp is broken, the fog lamp frame is also likely to be broken. For example, the right rear fender, the right lower rocker panel, and the right rear door are common damaged part combination, moreover, based on historical loss assessment conclusion data, it can be seen that when the right rear fender and the right lower rocker panel are damaged at the same time, the right rear door is more likely to be damaged at the same time. In some existing methods for identifying damaged parts based on captured images, some damaged parts are often missed in the loss assessment conclusion due to capturing angle, the underlying logic of the recognition algorithm, and the quality of the loss assessment image, etc. In the embodiments as provided in the present description, the probability that certain damaged parts are accompanied by damages to other parts in the loss assessment process can be obtained at least based on historical loss assessment conclusion data, and when the loss assessment conclusion process is performed, the historical loss assessment conclusion data can be used to judge whether the damaged part combination in the loss assessment conclusion is a normal damaged part combination (which can be defined according to specific scenario). If so, it is possible to further find out whether there is a damage-related part of the damaged part in the loss assessment conclusion, and if so, it is possible to use the damage-related part as a missed damaged part to supplement or correct the loss assessment conclusion, thereby improving the accuracy of the loss assessment conclusion.

Embodiments provided herein may utilize the method of Bayesian inference to calculate the probability of occurrence of the damaged part combination in the loss assessment conclusion. For example, it is possible to design a Bayesian inference engine such that historical loss assessment conclusion data can be obtained from historical cases of loss assessment and stored in a database, then the reliability of the conclusion can be identified based on priori probability and conditional probability of occurrence of a damaged part appeared in a large number of historical loss assessment conclusions. In some embodiments where Bayesian inference is used in the present description, the priori probability and the conditional probability can be calculated using the formulas below:

Calculation of priori probability: Pro (combination of damage x) = Num (combination of damage x) / Num (historical case of loss assessment);

conditional probability calculation: Pro (damaged part y | combination of damage x) = Pro (damaged part y, combination of damage x) / Pro (combination of damage x).

A low conditional probability may indicate that the related damaged part combination is less likely to occur in a historical case and may be considered a suspicious loss assessment conclusion. The priori probability and conditional probability calculations can be updated by the historical loss assessment conclusion data in the database, and of course, can also be obtained by the real-time calculation by the real-time streaming engine if the computer performance allows.

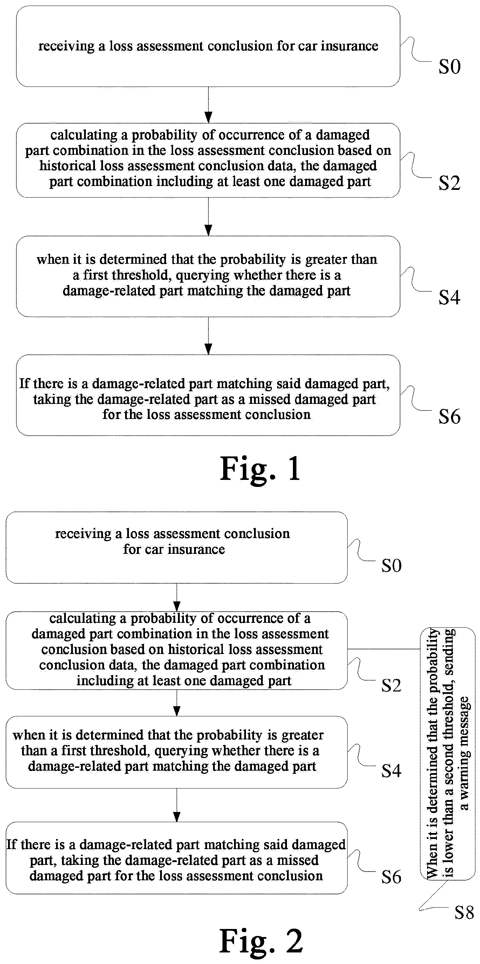

Hereinafter, an embodiment of the present description will be described by using a procedure, in which a loss decision-making system processes a loss conclusion that includes a plurality of damaged parts in a loss assessment, as an application scenario. Specifically, FIG. 1 is a schematic flowchart of an embodiment of a data processing method for displaying the contents of an interface provided in the present description. Although the present description provides method operation steps or an apparatus structure shown in the following embodiment or the accompanying drawings, the method or apparatus can include, based on conventional or non-inventive effort, more operation steps or module units, or fewer operation steps or module units after combination of some operation steps or module units. For those steps or structures which are not logically causal, the execution order of these steps or the module structure of the apparatus is not limited to the execution order or the module structure shown in the embodiments of the present description or the accompanying drawings. When used in an actual apparatus, server, or terminal product, the method or module structure can be executed in a sequence based on the method or module structure shown in the embodiment or the accompanying drawings or can be executed in parallel (for example, in an environment of parallel processors or multi-thread processing, or even in an implementation environment of distributed processing and server clustering).

Specifically, as shown in FIG. 1, in an embodiment of the data processing method for web page access as provided in the present description, the method can include the following steps:

S0: receiving a loss assessment conclusion for car insurance.

Generally, the loss assessment conclusion may include information about the identified damaged parts of the vehicle, for example, name, extent of damage, position of damage, etc. of the damaged parts may be included in the loss assessment conclusion. The user may enter a loss assessment conclusion into the loss assessment decision-making system, for example, a loss assessment conclusion obtained by manually performing the loss assessment. In other implementation scenarios, the loss assessment conclusion may also be transmitted to the loss assessment decision-making system by other terminal devices, for example, the loss assessment server sends the loss assessment conclusion obtained by the loss assessment image recognition process to the loss assessment decision-making system, which can process the loss assessment conclusion on-the-fly or subsequent to a persistence procedure.

S2: calculating a probability of occurrence of damaged part combination in the loss assessment conclusion based on historical loss assessment conclusion data, the damaged part combination including at least one damaged part.

In this embodiment, when a damaged part is missing, the damaged part combination may include one damaged part only. If the damaged part combination in the loss assessment conclusion relates to damage to fog lamp, there is usually a high probability that the fog lamp frame is also damaged. Therefore, the damaged part combination in this embodiment may include one damaged part, so that the damage-related part (i.e. fog lamp frame) can be matched based on the damaged part (i.e. fog lamp), subsequently, to obtain the missed damaged part. As described above, a Bayesian inference method may be employed in combination with historical loss assessment conclusion data stored in a database to calculate a probability of occurrence of damaged part combination in the loss assessment conclusion. Of course, the present description does not exclude other embodiments in which other statistical or induction or prediction algorithms, or customized algorithms or models, may be used and historical loss assessment conclusion data is used to derive the probability of occurrence of damaged part combination in a loss assessment conclusion.

S4: when it is determined that the probability is greater than a first threshold, querying whether there is a damage-related part matching the damaged part.

If the probability of occurrence of the damaged part combination is greater than a certain threshold, it may indicate that the damaged part combination belongs to a normal damaged part combination (also referred to as a combination of frequently damaged parts). Then, it is possible to query whether there is a damage-related part matching the damaged part with reference to the analysis result of the historical loss assessment conclusion data. Specifically, statistics can be made on the historical loss assessment conclusion data so that when a certain part is found damaged, it is possible to obtain information about another damaged part at the same time. Alternatively, a learning model that could be easily trained may be established, and training & learning may be performed using historical loss assessment record data as sample data, for example, by using CNN (Deep Neural Networks), GBDT (GradientBoosting DecisionTree), SVM (Support Vector Machine), and so on.

In general, if a part is damaged, some parts around this part may be also damaged. Thus, this embodiment may further query whether there is a damage-related part matching the damaged part. In a specific embodiment, the step of querying whether there is a damage-related part matching the damaged part may include:

S40: querying the damage-related part of the damaged part in a historical relation rule, the historical relation rule includes information on a second part that is potentially damaged when a first part is found damaged as recorded in the historical loss assessment conclusion data.

The historical relation rule may be generated based on information in the history loss assessment conclusion data that a certain damaged part (which may be referred to as first part) is accompanied by another damaged part (which may be referred to as second part). For example, in some historical loss assessment conclusions, when part A is damaged, sometimes part B is also damaged, while in other historical loss assessment conclusions, part C is damaged but part B is not damaged. Of course, there are historical loss assessment conclusions where both parts B and C are damaged when part A is damaged. In this way, a historical relation rule can be generated based on the processing of the historical loss assessment conclusion data, the historical relation rule may record information about a second part that may be damaged when a first part is damaged, the number of second part may be one or more than one. For example, a historical relation rule could be "when part A is damaged, part B is damaged", or a historical relation rule could be "when part A is damaged, part C is damaged".

In historical loss assessment conclusion data, the number of occurrence of different combinations of damaged parts containing an identical damaged part may be different, which corresponds to different probabilities of their occurrence. In another embodiment of the method as provided herein, the historical relation rule for a certain part may have a corresponding confidence level, which may be determined from the probability that the second damaged part is damaged when the first part is damaged, in the historical loss assessment conclusion data. It is possible to select a damage-related part having a confidence level higher than a threshold as the matched damage-related part when the damaged part is determined.

The higher the confidence level is, the higher the probability that the damage of the first part is accompanied by the damage of the second part will be. In this embodiment, the damage-related part in the historical relation rule is filtered using the confidence level, and a high confidence level larger than the threshold is selected as the matched damage-related part, so that the accuracy of identifying and finding the missed damaged parts can be further improved, thereby improving the reliability and accuracy of the loss assessment conclusion. The threshold for selecting the confidence level can be set in connection with the application scenario, for example, it may be set to select a damage-related part corresponding to a confidence level greater than 90%.

In a specific example, a first threshold may be set to 0.5%, for example, and the damaged part A and the damaged part B are included in the damaged part combination. The probability of occurrence of the damaged part combination calculated from the historical loss assessment conclusion data is 65%, indicating that the damaged part combination of A and B is a common combination. Query of historical case relation rules shows that, in 90% of cases, when parts A and B are damaged at the same time, part C is also damaged. In this case, part C may be the damage-related part of the damaged part A or the damage-related part of the damaged part B.

S6: If so, using the damage-related part as a missed damaged part for the loss assessment conclusion.

In some application scenario, if a damage-related part is found, it might be a deliberate fraud by the user or an automatic loss assessment error by the system. In this embodiment, the damage-related part may be used as a missed damaged part which should be included in the loss assessment conclusion, and the missed damaged part may be sent as a pushed or prompted information to the designated recipient for manual review. In other embodiments, the loss can be re-assessed using the missed damaged part as a damaged part in the loss assessment conclusion, such that the missed damaged part and the originally included damaged part can be included in the output loss assessment conclusion.

By using the embodiments as provided in the above examples, it is possible to improve and modify the loss assessment conclusion, solve the problem of outputting irrational loss assessment conclusion in some scenarios, effectively improve the accuracy and reliability of the output loss assessment conclusion, and improve user experience. For example, in a certain car insurance loss assessment case, only the damage to right rear fender and right lower rocker panel are output, while the actual loss assessment sheets and a large amount of historical data indicate that the right rear fender, the right lower rocker panel and the right rear door belong to a common combination of damage, and when the right rear fender and the right lower rocker panel are damaged at the same time, the probability of damage to the right rear door damage is 90%. With the embodiments provided in the present description, the problem of such "irrational output" can be effectively solved, and the accuracy of the conclusion of the car insurance loss assessment output can be effectively improved, resulting in a better user experience.

In another application scenario of the method as provided in the present application, another situation may occur that does not conform to a conventional part combination, such as deliberate fraud. Malicious users can claim their loss illegally by falsifying loss assessment images, deliberately taking photo at abnormal angles, and even using loss assessment images of other vehicles. In this case, there may be some situations that do not conform to the conventional part combination, for example, a vehicle is collided at the position of right front door, a right front wheel and a right front A-pillar are then damaged, but the right turn light is not damaged. In this case, it may be a car insurance fraud or a collision at a specific angle. In view of this, in another embodiment of the method as provided in the present description, the damaged part combination includes at least two damaged parts. If the probability of occurrence of the damaged part combination is lower than a certain threshold, a warning message may be sent, and the damaged part combination are prompted for manual verification or re-identification process, etc. Thus, in another embodiment of the method as provided in the present description, if the damaged part combination comprises at least two damaged parts, the method may further comprise:

S8: When it is determined that the probability is lower than a second threshold, sending a warning message.

FIG. 2 is a schematic flowchart of another embodiment of the method as described in the present description. In general, an unconventional part combination does not completely exclude situations that are not likely to occur, but are generally less frequent in historical loss assessment conclusion data.

Of course, it should be noted that in other embodiments of the present description, there may be an implementation scenario where the damaged part combination includes one damaged part. A warning message may also be issued if the probability of occurrence of the damaged part combination is lower than a threshold (which may be referred to herein as a fourth threshold). For example, the damaged part combination includes a vehicle interior part, such as an armrest box. In most vehicle loss occurrence, the possibility of damage to nothing but the armrest box is extremely low. Thus, in some implementation scenarios, a warning message may be sent out if the damaged part combination includes one damaged part only, and the probability of occurrence of the damaged part combination is lower than the fourth threshold. Thus, in another embodiment of the method, a warning message is sent out if the damaged part combination comprises one damaged part and the probability is determined to be lower than the fourth threshold.

In one embodiment of the method as provided in the present description, calculating the probability of occurrence of the damaged part combination based on historical loss assessment conclusion data comprises:

deciding that the probability of occurrence of the damaged part combination is 0, if the number of occurrences in the historical loss assessment conclusion data of the damaged parts included in the loss assessment conclusion is lower than a third threshold.

For example, if a combination of a damaged part A and a damaged part M occurs once in 10,000 historical loss assessment conclusions and is lower than a set threshold (in order to distinguish different thresholds, it may be referred to herein as a third threshold), then it can be decided that the probability of occurrence of the combination of the damaged part A and the damaged part M in the current loss assessment conclusion is 0.

As previously mentioned, some situations that do not conform to conventional combination of parts may still occur, for example, at certain specific collision angles, at certain impact locations, or in certain seasons, a rare damaged part combination may occur. Accordingly, in another embodiment of the present description, data information under specific conditions in historical loss assessment conclusion data, such as characteristics of collision angle, collision strength, region, vehicle type, time (season), weather, type of accident, etc., may also be combined to match specific conditions of the current loss assessment conclusion. If the specific conditions for the current loss assessment conclusion match the specific conditions for the historical loss assessment conclusion data, it can indicate that the environments (specific conditions) in which the accidents occurred are the same or similar, and there is a greater possibility that a situation which does not conform to the conventional part combination may occur. Accordingly, in another embodiment as provided in the present description, when calculating the probability of occurrence of damaged part combination in the loss assessment conclusion based on the historical loss assessment conclusion data, specific condition data corresponding to the loss assessment conclusion is also acquired, where the specific condition data includes at least one data information of collision angle, collision strength, place of the accident, accident occurrence, and type of the accident;

Accordingly, if the specific condition data of the loss assessment conclusion matches the specific condition data of the historical loss assessment conclusion data, it is determined that the probability of occurrence of the damaged part combination in the loss assessment conclusion is greater than the first threshold.

In an implementation scenario where an armrest box is damaged as described above, the specific condition data may describe a scenario like opened sun roof, car parked near a building, and high-rise littering. Under such specific conditions it is possible that the armrest box is the only damaged part. If this is the case which occurred in the past and the specific conditions of the loss assessment conclusion being processed are also the case so that the conditions on site of the part damage are the same or similar, then the probability that is greater than the first threshold can be output, indicating that the current damaged part combination conforms to the normal probability of occurrence under such specific conditions. In this way, this embodiment can further improve the reliability of the loss assessment conclusion by processing the loss assessment conclusion in combination with the data information under the specific conditions. In the embodiments of the present description, the data used to determine missing part or risk may include not only historical loss assessment sheet data, but also other data such as collision traces.

In another embodiment of the method, the loss assessment conclusion data after manual review or addition of missed damaged parts can be used as new historical loss assessment conclusion data. In this way, through continuous data accumulation, the historical loss assessment conclusion data can be completer and more reliable, and the subsequent processing results of vehicle loss assessment data can become accurate and reliable increasingly. Specifically, in another embodiment of the method, the method may further comprise:

> S10: Obtaining a corrected loss assessment conclusion, and using the corrected loss assessment conclusion as the historical loss assessment conclusion data, wherein the corrected loss assessment conclusion comprises:
> a first corrected loss assessment conclusion obtained by modifying the loss assessment conclusion based on the missed damaged parts when the probability is greater than the first threshold;
> or,
> a second corrected loss assessment conclusion obtained by reviewing and confirming the loss assessment conclusion based on the warning message when the probability is lower than the second threshold.

The corrected loss assessment conclusion may include any or both of the first and second corrected loss assessment conclusions as described above.

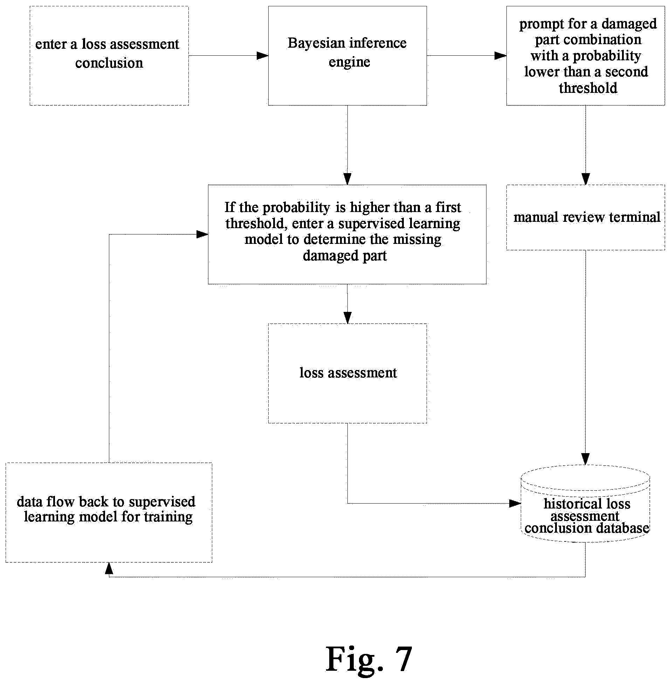

FIG. 7 is a schematic diagram of a system framework of a loss assessment decision-making system constructed using the method as described in the present description, in which the broken line represents portions that may not necessarily be included in some embodiments. Embodiments of present description provide a set of efficient and accurate methods for processing loss assessment data for car insurance, which can output more accurate loss assessment results, and provide a set of mechanisms for automatically diverting questionable loss assessment conclusions to carry out a risk warning on questionable items of loss assessment combinations, such that it is possible to identify cases with suspected fraud, and in case result of the algorithm is unreliable, manual intervention is made to correct the conclusion and to enhance integrity of the loss assessment, so as to improve the user experience and reduce the risk of fraud.

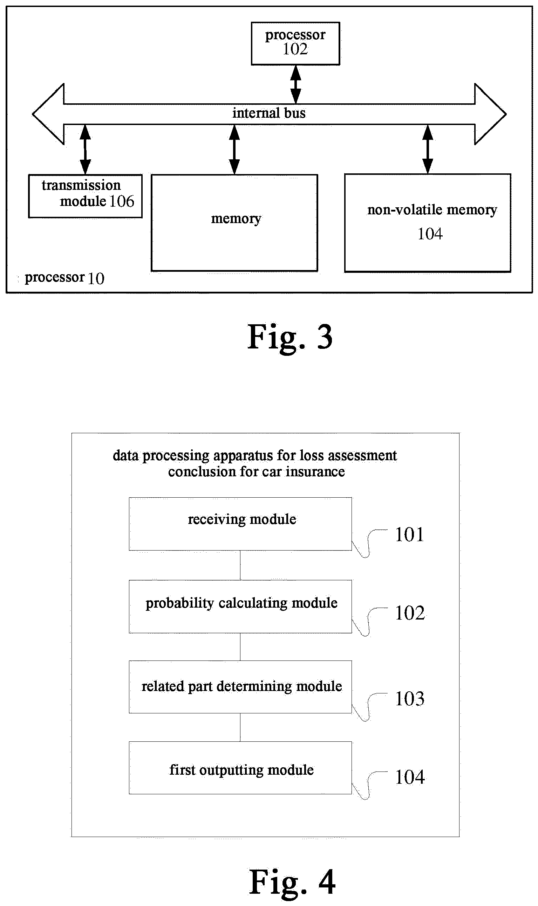

The method embodiments as provided in the embodiments of the present application may be executed in a mobile terminal, a computer terminal, a server, or a similar computing device. Taking the mobile terminal as an example, FIG.3 is a block diagram of a hardware structure of a mobile terminal for performing the method for processing loss assessment data for car insurance according to an embodiment of the present invention. As shown in fig.3, the mobile terminal 10 may include one or more (only one is shown in this figure) processors 102 (the processors 102 may include, but are not limited to, processing devices such as a microprocessor MCU or programmable logic device FPGA), a memory 104 for storing data, and a transmission module 106 for communication functions. Those of ordinary skill in the art will appreciate that the structure shown in FIG. 3 is merely schematic and does not limit the structure of the electronic device as described above. For example, the mobile terminal 10 may also include more or fewer parts than those shown in FIG.7, for example, it may further include other pieces of processing hardware, or has configurations different from that shown in FIG.3.

The memory 104 may be used to store software programs and modules of application software, such as program instructions / modules corresponding to search methods in embodiments of the present invention. The processor 102 executes various functional applications and data processing by running the software programs and modules stored in memory 104, that is, to realize the above-mentioned method for processing loss assessment data for car insurance. The memory 104 may include high-speed random access memory, and may also include non-volatile memory, such as one or more magnetic storage devices, flash memories, or other non-volatile solid state memories. In some examples, the memory 104 may further include memory remotely disposed with respect to the processor 102, which may be connected to the computer terminal 10 via network. Examples of such network include, but are not limited to, the Internet, an intranet, a local area network, a mobile communication network, and combinations thereof.

The transmission module 106 is configured to receive or send data via a network. A specific example of the network as described above may include a wireless network provided by a communication provider of the computer terminal 10. In one example, the transmission module 106 includes a Network Interface Controller (NIC), which may be connected to other network devices through a base station so as to communicate with the Internet. In one example, the transmission module 106 may be a Radio Frequency (RF) module for communicating with the Internet wirelessly.

Based on the method for positioning an object in image as described above, the present description further provides a data processing apparatus for displaying the contents of an interface. The apparatus may include an apparatus using a system (including a distributed system), software (application), modules, parts, servers, clients, etc. of the method described in the embodiments of the present description in conjunction with necessary implementation hardware. Based on the same inventive concept, a processing apparatus in an embodiment as provided in the present description is described in the following embodiments. Because the implementation of resolving a problem by using the apparatus is similar to that of the method, for specific processing apparatus implementation in the present description, reference can be made to implementation of the method mentioned above, and details are not repeated here again. Although the apparatus described in the following embodiments is preferably implemented as software, implementation of hardware or a combination of software and hardware may also be conceived. Specifically, FIG.4 is a schematic module structure diagram of an embodiment of a data processing apparatus for displaying the contents of an interface, provided in the present description. As shown in FIG.4, the apparatus can include:

a receiving module 101 configured to receive a loss assessment conclusion for car insurance;
a probability calculating module 102 configured to calculate a probability of occurrence of damaged part combination in the loss assessment conclusion based on historical loss assessment conclusion data, the damaged part combination comprising at least one damaged part;
a related part determining module 103 configured to query whether there is a damage-related part matching the damaged part when it is determined that the probability is greater than a first threshold;
a first outputting module 104 configured to use the damage-related part as a missed damaged part for the loss assessment conclusion when a matched damage-related part is found.

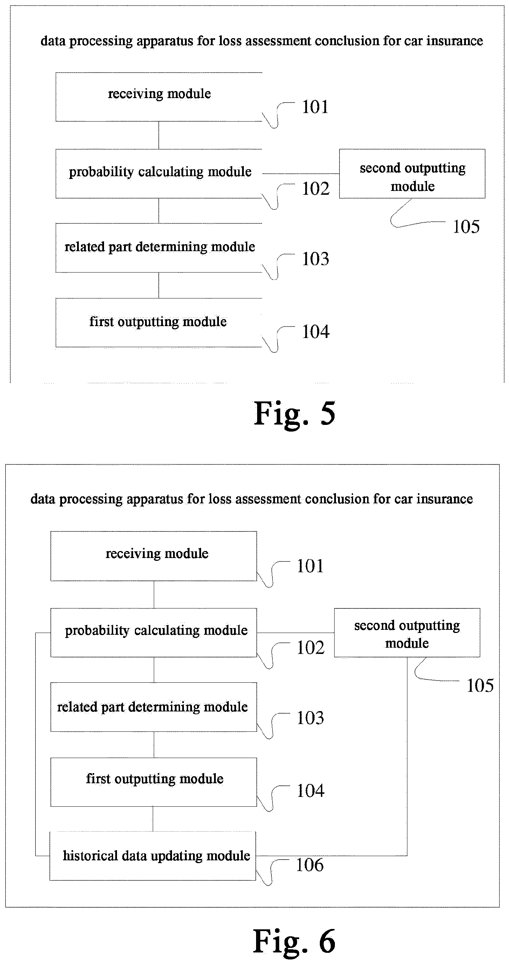

FIG.5 is a schematic module structure diagram of another embodiment of the apparatus provided in the present description. As shown in FIG. 5, the apparatus may further include:
a second outputting module 104 configured to send a warning message when the probability calculating module 102 determines that the probability is lower than a second threshold.

In another embodiment of the apparatus, the probability calculating module 102 may include:
a Bayesian inference unit configured to calculate the probability of the damaged part combination based on a priori probability and a conditional probability of occurrence of the damaged part in the historical loss assessment conclusion data using the Bayesian inference method.

In another embodiment of the apparatus, calculating, by the probability calculating module 102, the probability of occurrence of the damaged part combination based on historical loss assessment conclusion data comprises:
deciding that the probability of occurrence of the damaged part combination is 0, if the number of occurrences in the historical loss assessment conclusion data of the damaged part included in the loss assessment conclusion is lower than a third threshold.

In another embodiment of the apparatus, when calculating the probability of occurrence of damaged part combination in the loss assessment conclusion based on the historical loss assessment conclusion data, specific condition data corresponding to the loss assessment conclusion is also acquired, where the specific condition data includes at least one data information of collision angle, collision strength, place of the accident, accident occurrence, and type of the accident;

Accordingly, if the specific condition data corresponding to the loss assessment conclusion matches the specific condition data in the historical loss assessment conclusion data, it is determined that the probability of occurrence of the damaged part combination in the loss assessment conclusion is greater than the first threshold.

In another embodiment of the apparatus, querying, by the related part determining module 103, whether there is a damage-related part matching the damaged part comprises:

querying the damage-related part of the damaged part in a historical relation rule, the historical relation rule includes information on a second part that is potentially damaged when a first part is found damaged as recorded in the historical loss assessment conclusion data.

In another embodiment of the apparatus, the related part determining module 103 may further include:

a filtering unit configured to select a damage-related part having a confidence level greater than a threshold as the matched damage-related part, the confidence level is determined based on the probability that the second damaged part is damaged when the first part is damaged, in the historical loss assessment conclusion data.

FIG.6 is a schematic module structure diagram of another embodiment of the apparatus provided in the present description. As shown in FIG.6, the apparatus may further include:

a historical data updating module 106 configured to obtain a corrected loss assessment conclusion and use the same as the historical loss assessment conclusion data, wherein the corrected loss assessment conclusion includes:
a first corrected loss assessment conclusion obtained by modifying the loss assessment conclusion based on the missed damaged part when the probability is greater than the first threshold;
or,
a second corrected loss assessment conclusion obtained by reviewing and confirming the loss assessment conclusion based on the warning message when the probability is lower than the second threshold.

It should be noted that the above-described processing apparatus according to the embodiments of the present description may be implemented in a specific manner with reference to the descriptions in the method embodiments, which is not described in detail herein.

The data processing method for displaying the contents of an interface provided by the embodiments of the present description may be implemented by a processor executing corresponding program instructions in a computer, such as implemented at a PC end by using a C++ language of a Windows operating system, or implemented by using a corresponding application design language in another system such as Linux, Android, and iOS in combination with necessary hardware, or implemented based on the processing logic of a quantum computer. Specifically, in an embodiment of a processing device provided in the present description, the processing device may include a processor and a memory for storing processor-executable instructions, and when executing the instructions, the processor is configured to:

receive a loss assessment conclusion for car insurance;
calculate a probability of occurrence of damaged part combination in the loss assessment conclusion based on historical loss assessment conclusion data, the damaged part combination including at least one damaged part;
query, when it is determined that the probability is greater than a first threshold, whether there is a damage-related part matching the damaged part;
if there is a damage-related part matching said damaged part, take the damage-related part as a missed damaged part for the loss assessment conclusion.

The instructions described above may be stored in a variety of computer-readable storage media. The computer-readable storage medium may include a physical device for storing information, and the information may be digitized and then stored in a medium using electrical, magnetic, or optical means. The computer-readable storage medium described in this embodiment may include: a device that stores information using electrical energy, such as various types of memory, such as RAM, ROM, and the like; a device that uses magnetic energy to store information, such as a hard disk, a floppy disk, a magnetic tape, a magnetic core memory, a bubble memory, and a USB; a device that uses optical means to store information, such as CD or DVD. Of course, there are other types of readable storage media, such as quantum memory, graphene memory, and so on.

As described above, the embodiments of the present description also provide a device for processing loss assessment data for car insurance, which may include a mobile terminal, a personal handheld computer, a smart wearable device, a car-machine interactive device, a personal computer, a server, and a server cluster, etc. The processing device may include at least one processor and a memory for storing processor-executable instructions, and when executing the instructions, the processor is configured to:

receive a loss assessment conclusion for car insurance;

calculate a probability of occurrence of damaged part combination in the loss assessment conclusion based on historical loss assessment conclusion data, the damaged part combination including at least one damaged part;

query, when it is determined that the probability is greater than a first threshold, whether there is a damage-related part matching the damaged part, and if so, using the damage-related part as a missed damaged part for the loss assessment conclusion;

send a warning message when it is determined that the probability is lower than a second threshold,.

It should be noted that the processing device and the electronic device described above in the embodiments of the present description may also include other embodiments according to the descriptions in the relevant method embodiments, for example. For a specific implementation, reference can be made to descriptions in the method embodiments, which is not described herein again.

The embodiments in the present description are described progressively, identical or similar parts of the embodiments may be obtained with reference to each other, and each embodiment focuses on a portion different from other embodiments. In particular, the hardware plus program embodiments are basically similar to the method embodiments, thus being described breifly. For related portions, the descriptions of the portions in the method embodiments could be referred.

Specific embodiments of the present description have been described abov. Other embodiments will fall within the scope of the appended claims. Under some circumstances, the actions or steps described in the claims may be performed in an order different from that in the embodiments and still can achieve a desired result. In addition, the processes depicted in the accompanying drawings are unnecessary in the shown order or consecutive order to achieve the desired result. In some embodiments, multitask processing and parallel processing are also possible or may be advantageous.

It should be noted that the computer-readable storage medium described above may also include other embodiments according to the descriptions in the method or apparatus embodiments. For a specific implementation, reference can be made to descriptions in the method embodiments, which is not described herein again.

In the method and apparatus for processing loss assessment data for car insurance and processing device provided in the embodiments of the present description, the probability of occurrence of the damaged part combination in the loss assessment conclusion can be calculated in combination with case information of the damaged part combination in the historical loss assessment conclusion data, the probability may indicate reliability of the loss assessment conclusion. If the probability is greater than a certain threshold, it may indicate that the damaged part combination in the loss assessment conclusion is a common combination of damage (also may be referred to as a frequent combination of damage), and the probability represents a probability of occurrence of a normal part combination. In the embodiments provided in the present description, if a part is damaged, a check to confirm whether other parts related to the part are also damaged can be done, and if so, a recommendation on missed damaged parts can be made, and the loss assessment conclusion can be supplemented or corrected. In this way, it is possible to solve the problem of outputting irrational loss assessment conclusion in some scenarios, effectively improve the accuracy and reliability of the output loss assessment conclusion, and improve user experience.

Although the present application provides the operation steps of the method in an embodiment or a flowchart, more or fewer operation steps can be included based on conventional or non-inventive effort. The order of the steps enumerated in the embodiments is merely one of a plurality of orders for step execution, and does not represent a unique order for execution. In practice, when executed in an apparatus or a client device, the steps can be executed in an order shown in an embodiment or a method shown in the accompanying drawings, or executed in parallel (for example, in an environment of parallel processors or multi-thread processing).

Although the content of the embodiments of the present description mentions operations and data descriptions such as data acquisition, data definition, data interaction, data calculation, and data judgment using Bayesian inference to calculate probability, DNN as a learning model, and setting of multiple thresholds, etc., the embodiments of the present description are not limited to the situations that must conform to industry communication standards, standard computer data processing protocols, communication protocols, and standard data models / templates or described in embodiments of the present description. An implementation solution which is derivable with minor modification based on some industry standards, or by using a self-defined method, or based on implementation described in the embodiments can also achieve an implementation effect that is the same as, equivalent to, or similar to the embodiments mentioned above or that can be predicted after variation. An embodiment derived by using changed or modified data acquisition, data storage, data determining, and data processing method is still within the scope of optional implementation solutions of the present description.

In 1990s, an improvement on a technology can be obviously classified as an improvement on hardware (e.g., an improvement on a circuit structure such as a diode, a transistor, and a switch) or an improvement on software (an improvement on a method procedure). However, with the development of technologies, improvements of many method procedures at present can be considered as direct improvements on hardware circuit structures. Almost all designers program the improved method procedures into hardware circuits to obtain corresponding hardware circuit structures. Therefore, it is improper to assume that the improvement of a method procedure cannot be implemented by using a hardware module. For example, a Programmable Logic Device (PLD) (e.g., a Field Programmable Gate Array (FPGA)) is such an integrated circuit, and its logic functions are determined by a user programming the device. Designers program by themselves to "integrate" a digital system into a PLD, without asking a chip manufacturer to design and manufacture a dedicated integrated circuit chip. Moreover, at present, programming is mostly implemented by using logic compiler software instead of manually manufacturing an integrated circuit chip. The logic compiler software is similar to a software complier used for developing and writing a program, and source codes before compiling also need to be written by using a specific programming language, which is referred to as a Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art should also know that a hardware circuit for implementing the logic method procedure can be easily obtained by slightly logically programming the method procedure using the above several hardware description languages and programming it into an integrated circuit.

A controller can be implemented in any suitable manner. For example, the controller can take the form of a microprocessor or a processor and a computer readable medium that stores computer readable program codes (such as software or firmware) executable by the microprocessor or processor, a logic gate, a switch, an Application Specific Integrated Circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The controller of the memory can further be implemented as a part of control logic of the memory. Those skilled in the art also know that in addition to implementing the controller by using computer readable program codes only, it is completely feasible to logically program the method steps to enable the controller to implement the same function in a form of logic gate, switch, ASIC, programmable logic controller, and embedded microcontroller. Therefore, such a controller may be considered as a hardware part, and apparatuses included in the controller and configured to implement various functions may also be considered as structures inside the hardware part. Or, the apparatuses configured to implement various functions may even be considered as both software modules configured to implement the method and structures inside the hardware part.

Specifically, the system, apparatus, modules or units illustrated in the foregoing embodiments can be implemented by a computer chip or a physical entity, or implemented by a product having a specific function. A typical implementation device is a computer. Specifically, for example, the computer can be a personal computer, a laptop computer, an on-board human-computer interaction device, a cellular phone, a camera phone, a smart phone, a personal digital assistant, a media player, a navigation device, an email device, a game console, a tablet computer, a wearable device, or a combination of any of these devices.

Although the embodiments of the present description provide the operation steps of the method in an embodiment or a flowchart, more or fewer operation steps can be included based on conventional or non-inventive means. The order of the steps enumerated in the embodiments is merely one of a plurality of orders for step execution, and does not represent a unique order for execution. In practice, when an apparatus or a terminal product executes the steps, the execution can be performed in an order shown in an embodiment or a method shown in the accompanying drawings, or performed in parallel (for example, in an environment of parallel processors or multi-thread processing, and even in a distributed data processing environment). The terms "include", "comprise" or any other variations thereof are intended to cover non-exclusive inclusion, so that a process, method, product or device including a series of elements not only includes those elements, but also includes other elements not expressly listed, or further includes elements inherent to the process, method, product or device. In the absence of more limitations, the presence of additional identical or equivalent elements in a process, method, product or device comprising said elements is not to be excluded.

For ease of description, the apparatus is divided into various modules based on functions, and the modules are described separately. Of course, when implementing the embodiments of the present description, the functions of various modules may be implemented in one or more pieces of software and/or hardware, or the modules implementing the same function may be implemented by a combination of multiple sub-modules or sub-units, or the like. The apparatus embodiments described above are merely illustrative. For example, the division of the units is merely a division of logical functions and there can be some other divisions in actual implementation. For example, a plurality of units or parts can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electrical, mechanical, or other forms.

Those skilled in the art also know that in addition to implementing the controller by using computer readable program codes only, it is completely feasible to logically program the method steps to enable the controller to implement the same function in a form of logic gate, switch, ASIC, programmable logic controller, and embedded microcontroller. Therefore, such a controller may be considered as a piece of hardware part, and apparatuses included in the controller and configured to implement various functions may also be considered as structures inside the hardware part. Or, the apparatuses configured to implement various functions may even be considered as both software modules configured to implement the method and structures inside the hardware part.

The present invention is described with reference to flowcharts and/or block diagrams of the method, the device (system) and the computer program product according to the embodiments of the present invention. It should be understood that computer program instructions may be used to implement each process and/or block in the flowcharts and/or block diagrams and combinations of processes and/or blocks in the flowcharts and/or block diagrams. The computer program instructions may be provided to a general-purpose computer, a special-purpose computer, an embedded processor or a processor of another programmable data processing device to generate a machine, such that instructions executed by the computer or the processor of another programmable data processing device generate an apparatus configured to implement functions designated in one or more processes in a flowchart and/or one or more blocks in a block diagram.

The computer program instructions may also be stored in a computer readable memory that can guide the computer or another programmable data processing device to work in a specific manner, such that the instructions stored in the computer readable memory generates an article of manufacture including an instructing device, and the instructing device implements functions designated in one or more processes in a flowchart and/or one or more blocks in a block diagram.

The computer program instructions may also be loaded to the computer or another programmable data processing device, such that a series of operational steps are executed on the computer or another programmable device to generate a computer implemented processing, and therefore, the instructions executed in the computer or another programmable device provides steps for implementing functions designated in one or more processes in a flowchart and/or one or more blocks in a block diagram.

In a typical configuration, the computing device includes one or more central processing units (CPUs), an input/output interface, a network interface, and a memory.

The memory can include computer readable medium such as a volatile memory, a Random Access Memory (RAM), and/or non-volatile memory, e.g., a Read-Only Memory (ROM) or a flash RAM. The memory is an example of a computer readable medium.

The computer readable medium includes non-volatile and volatile media as well as movable and non-movable media, and can implement information storage by means of any method or technology. The information can be computer readable instructions, a data structure, a program module or other data. An example of the storage medium of a computer includes, but is not limited to, a phase change memory (PRAM), a static random access memory (SRAM), a dynamic random access memory (DRAM), other types of RAM, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

Those skilled in the art should understand that the embodiments of the present description can be provided as a method, a system, or a computer program product. Therefore, the embodiments of the present description may be implemented in a form of a complete hardware embodiment, a complete software embodiment, or an embodiment combining software and hardware. Moreover, the embodiments of the present description can be in the form of a computer program product implemented on one or more computer usable storage medium (including, but not limited to, a magnetic disk memory, a CD-ROM, an optical memory and the like) including computer usable program codes.

The embodiments of the present description can be described in a general context of computer executable instructions executed by a computer, for example, a program module. Generally, the program module includes a routine, a program, an object, an assembly, a data structure, and the like used for executing a specific task or implementing a specific abstract data type. The embodiments of the present description can also be implemented in distributed computing environments. In these distributed computing environments, a task is executed by using remote processing devices connected via a communications network. In a distributed computing environment, the program module may be located in local and remote computer storage medium including a storage device.

The embodiments in the present description are described progressively, identical or similar parts of the embodiments may be obtained with reference to each other, and each embodiment focuses on a portion different from other embodiments. Especially, the system embodiment is basically similar to the method embodiment, thus being described briefly; and for the relevant portions, reference can be made to the descriptions of the method embodiment. In the descriptions of the present application, reference terms as "an embodiment", "some embodiments", "an example", "a specific example", or "some examples" mean that specific features, structures, materials, or characteristics described with reference to the embodiments or examples are included in at least one embodiment or example of the present application. In the present description, the foregoing terms are described not necessarily for the same embodiment or example. In addition, the described specific features, structures, materials, or characteristics can be combined in a proper manner in any one or more of the embodiments or examples. Furthermore, a person skilled in the art can combine different embodiments or examples described in the present description and features of different embodiments or examples without mutual contradiction.

The foregoing descriptions are merely embodiments of the present application, and are not intended to limit the present application. For a person skilled in the art, the embodiments of the present description can have various changes and variations. Any modifications, equivalent replacements, or improvements made within the spirit and principle of the present application shall fall within the scope of the claims in the present application.

**Claims**

1. A method for processing loss assessment data for car insurance, comprising:

   receiving a loss assessment conclusion for car insurance;
   calculating a probability of occurrence of damaged part combination in said loss assessment conclusion based on historical loss assessment conclusion data, said damaged part combination including at least one damaged part;
   querying, when it is determined that the probability is greater than a first threshold, whether there is a damage-related part matching said damaged part; and
   taking, if there is a damage-related part matching said damaged part, the damage-related part as a missed damaged part for the loss assessment conclusion.

2. The method according to claim 1, wherein if said damaged part combination comprises at least two damaged parts, the method further comprises:
   sending a warning message when it is determined that said probability is lower than a second threshold.

3. The method according to claim 1 or 2, wherein calculating the probability of occurrence of said damaged part combination based on historical loss assessment conclusion data comprises:
   calculating the probability of said damaged part combination based on a priori probability and a conditional probability of occurrence of the damaged part in the historical loss assessment conclusion data, by using a Bayesian inference method.

4. The method according to claim 1 or 2, wherein calculating the probability of occurrence of said damaged part combination based on historical loss assessment conclusion data comprises:
   deciding that the probability of occurrence of said damaged part combination is 0, if the number of occurrences in the historical loss assessment conclusion data of the damaged parts included in said loss assessment conclusion is lower than a third threshold.

5. The method according to claim 4, wherein, in calculating the probability of occurrence of damaged part combination in said loss assessment conclusion based on the historical loss assessment conclusion data, the method further comprises:

   acquiring specific condition data corresponding to said loss assessment conclusion,
   wherein said specific condition data includes at least one data information of collision angle, collision strength, place of the accident, accident occurrence, and accident type;
   and
   determining, if the specific condition data corresponding to said loss assessment conclusion matches the specific condition data in said historical loss assessment conclusion data, that the probability of occurrence of the damaged part combination in said loss assessment conclusion is greater than the first threshold.

6. The method according to claim 1, wherein said querying whether there is a damage-related part matching said damaged part comprises:

   querying the damage-related part for said damaged part in a historical relation rule,

and wherein said historical relation rule is determined based on the historical loss assessment conclusion data in which a second part is damaged when a first part is damaged.

7. The method according to claim 6, further comprising:
selecting a damage-related part having a confidence level greater than a threshold as said matched damage-related part, wherein the confidence level is determined on the basis of a probability of occurrence of said second damaged part when said first damaged part occurs in the historical loss assessment conclusion data.

8. The method according to claim 1 or 2, further comprising:

obtaining a corrected loss assessment conclusion, and using said corrected loss assessment conclusion as the historical loss assessment conclusion data,
wherein said corrected loss assessment conclusion comprises:

a first corrected loss assessment conclusion obtained by modifying said loss assessment conclusion based on said missed damaged part, when said probability is greater than the first threshold; or
a second corrected loss assessment conclusion obtained by reviewing and confirming said loss assessment conclusion based on the warning message, when said probability is lower than the second threshold.

9. A data processing apparatus for displaying contents of an interface, comprising:

a receiving module configured to receive a loss assessment conclusion for car insurance;
a probability calculating module configured to calculate a probability of occurrence of a damaged part combination in said loss assessment conclusion based on historical loss assessment conclusion data, said damaged part combination comprising at least one damaged part;
a related part determining module configured to query whether there is a damage-related part matching said damaged part when it is determined that said probability is greater than a first threshold;
a first outputting module configured to take said damage-related part as a missed damaged part for the loss assessment conclusion when a matched damage-related part is found.

10. The apparatus according to claim 9, further comprising:
a second outputting module configured to send a warning message when the probability calculating module determines that said probability is lower than a second threshold.

11. The apparatus according to claim 9 or 10, wherein said probability calculating module comprises:
a Bayesian inference unit configured to calculate the probability of said damaged part combination based on a priori probability and a conditional probability of occurrence of the damaged part in the historical loss assessment conclusion data, by using a Bayesian inference method.

12. The apparatus according to claim 9 or 10, wherein calculating, by said probability calculating module, the probability of occurrence of said damaged part combination based on the historical loss assessment conclusion data comprises:
deciding that the probability of occurrence of said damaged part combination is 0, if the number of occurrences in the historical loss assessment conclusion data of the damaged part included in said loss assessment conclusion is lower than a third threshold.

13. The apparatus according to claim 12, wherein the probability calculating module further acquires, in calculating the probability of occurrence of said damaged part combination in said loss assessment conclusion based on the historical loss assessment conclusion data, specific condition data corresponding to said loss assessment conclusion, wherein the specific condition data includes at least one data information of collision angle, collision strength, place of the accident, occurrence of accident, and accident type; and
if the specific condition data corresponding to said loss assessment conclusion matches the specific condition data in said historical loss assessment conclusion data, it is determined that the probability of occurrence of said damaged part combination in the loss assessment conclusion is greater than the first threshold.

14. The apparatus according to claim 9, wherein querying, by said related part determining module, whether there is a damage-related part matching said damaged part comprises: querying the damage-related part of the damaged part in a historical relation rule, wherein said historical relation rule is determined based on the historical loss assessment conclusion data in which a second part is damaged when a first part is damaged.

**15.** The apparatus according to claim 14, wherein said related part determining module further comprises:
a filtering unit configured to select a damage-related part having a confidence level greater than a threshold as said matched damage-related part, wherein said confidence level is determined on the basis of a probability of occurrence of said second damaged part when said first damaged part occurs in the historical loss assessment conclusion data.

**16.** The apparatus according to claim 9 or 10, further comprising:

a historical data updating module configured to obtain a corrected loss assessment conclusion and use said corrected loss assessment conclusion as the historical loss assessment conclusion data,
wherein said corrected loss assessment conclusion includes:

a first corrected loss assessment conclusion obtained by modifying said loss assessment conclusion based on said missed damaged part, when said probability is greater than the first threshold; or
a second corrected loss assessment conclusion obtained by reviewing and confirming said loss assessment conclusion based on the warning message, when said probability is lower than the second threshold.

**17.** A processing device comprising a processor and a memory for storing processor-executable instructions, wherein when executing the instructions, the processor is configured to:

receive a loss assessment conclusion for car insurance;
calculate a probability of occurrence of damaged part combination in said loss assessment conclusion based on historical loss assessment conclusion data, said damaged part combination including at least one damaged part;
query, when it is determined that the probability is greater than a first threshold, whether there is a damage-related part matching said damaged part;
if there is a damage-related part matching said damaged part, take said damage-related part as a missed damaged part for the loss assessment conclusion.

**18.** An electronic device comprising at least one processor and a memory for storing processor-executable instructions, wherein when executing the instruction, the processor is configured to:

receive a loss assessment conclusion for car insurance;
calculate a probability of occurrence of damaged part combination in said loss assessment conclusion based on historical loss assessment conclusion data, said damaged part combination including at least one damaged part;
query, when it is determined that said probability is greater than a first threshold, whether there is a damage-related part matching said damaged part, and if there is a damage-related part matching said damaged part, take said damage-related part as a missed damaged part of said loss assessment conclusion; and
send a warning message, when it is determined that said probability is lower than a second threshold.

**19.** The method according to claim 1, further comprising sending a warning message, if said damaged part combination comprises one damaged part and said probability is determined to be lower than a fourth threshold.

receiving a loss assessment conclusion for car insurance

S0

calculating a probability of occurrence of a damaged part combination in the loss assessment conclusion based on historical loss assessment conclusion data, the damaged part combination including at least one damaged part

S2

when it is determined that the probability is greater than a first threshold, querying whether there is a damage-related part matching the damaged part

S4

If there is a damage-related part matching said damaged part, taking the damage-related part as a missed damaged part for the loss assessment conclusion

S6

# Fig. 1

receiving a loss assessment conclusion for car insurance

S0

calculating a probability of occurrence of a damaged part combination in the loss assessment conclusion based on historical loss assessment conclusion data, the damaged part combination including at least one damaged part

S2

when it is determined that the probability is greater than a first threshold, querying whether there is a damage-related part matching the damaged part

S4

If there is a damage-related part matching said damaged part, taking the damage-related part as a missed damaged part for the loss assessment conclusion

S6

When it is determined that the probability is lower than a second threshold, sending a warning message

S8

# Fig. 2

processor
102

internal bus

transmission
module 106

memory

non-volatile memory
104

processor 10

# Fig. 3

data processing apparatus for loss assessment
conclusion for car insurance

receiving module
101

probability calculating module
102

related part determining module
103

first outputting module
104

# Fig. 4

data processing apparatus for loss assessment conclusion for car insurance

receiving module — 101

probability calculating module — 102

second outputting module — 105

related part determining module — 103

first outputting module — 104

**Fig. 5**

data processing apparatus for loss assessment conclusion for car insurance

receiving module — 101

probability calculating module — 102

second outputting module — 105

related part determining module — 103

first outputting module — 104

historical data updating module — 106

**Fig. 6**

Fig. 7

## INTERNATIONAL SEARCH REPORT

| International application No. |
| --- |
| **PCT/CN2018/099998** |

**A.     CLASSIFICATION OF SUBJECT MATTER**

G06Q 40/08(2012.01)i

According to International Patent Classification (IPC) or to both national classification and IPC

**B.     FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI, ISI: 车, 损, 故障, 零件, 部件, 相关, 关联, 概率, 几率, 贝叶斯, vehicle, fault, failure, break, broken, accident, component, probability, bayes

**C.     DOCUMENTS CONSIDERED TO BE RELEVANT**

| Category* | Citation of document, with indication, where appropriate, of the relevant passages | Relevant to claim No. |
| --- | --- | --- |
| PX | CN 108062712 A (ALIBABA GROUP HOLDING LIMITED) 22 May 2018 (2018-05-22) claims 1-19 | 1-19 |
| Y | CN 106776681 A (PING AN PROPERTY & CASUALTY INSURANCE COMPANY OF CHINA) 31 May 2017 (2017-05-31) description, paragraphs [0021]-[0047], and figures 1 and 2 | 1-19 |
| Y | CN 103493051 A (AUDATEX GMBH) 01 January 2014 (2014-01-01) description, paragraphs [0040]-[0081], and figures 6-8b | 1-19 |
| A | CN 103163877 A (GM GLOBAL TECHNOLOGY OPERATIONS LLC) 19 June 2013 (2013-06-19) entire document | 1-19 |
| A | CN 102180170 A (LIN, LI) 14 September 2011 (2011-09-14) entire document | 1-19 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **18 October 2018** | **31 October 2018** |

| Name and mailing address of the ISA/CN | Authorized officer |
| --- | --- |
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/099998**

| Patent document cited in search report | | | Publication date (day/month/year) | Patent family member(s) | | | Publication date (day/month/year) |
|---|---|---|---|---|---|---|---|
| CN | 108062712 | A | 22 May 2018 | None | | | |
| CN | 106776681 | A | 31 May 2017 | None | | | |
| CN | 103493051 | A | 01 January 2014 | WO | 2012113084 | A1 | 30 August 2012 |
| | | | | CA | 2828017 | A1 | 30 August 2012 |
| | | | | US | 2015294419 | A1 | 15 October 2015 |
| | | | | EP | 2553635 | A1 | 06 February 2013 |
| CN | 103163877 | A | 19 June 2013 | DE | 102012223393 | A1 | 20 June 2013 |
| | | | | US | 2013159240 | A1 | 20 June 2013 |
| CN | 102180170 | A | 14 September 2011 | None | | | |

Form PCT/ISA/210 (patent family annex) (January 2015)